# EUROPEAN PATENT APPLICATION

(11) **EP 1 454 797 A1**
(43) Date of publication of application: **08.09.2004**
(21) Application number: 04100918.4
(22) Date of filing: 06.03.2004
(51) Int. Cl.: B60R 11/06

(54) **Supporting structure for housing vehicle components and/or accessories and vehicle featuring such a supporting structure**

(30) Priority: 07.03.2003 IT TO20030173
(71) Applicant: FIAT AUTO S.p.A., 10135 Torino (IT)
(72) Inventor: Cornacchia, Giorgio, 10100 Torino (IT); Rempel, Roberto Rogerio, 10020 Pecetto Torinese (IT)
(74) Representative: Jorio, Paolo, Dr. Ing.

(57) **Abstract**

A compartment (9) in a boot (2) of a vehicle (1) houses a component and/or accessory assembly (11), wherein a supporting structure (12), connected to the vehicle structure (18) and located beneath a loading surface (3) of the boot (2), has a first portion (14) for supporting at least one battery (29), and a second portion for supporting a spare wheel (31) at least partly surrounding the battery (29); the supporting structure (12) defining at least one compartment (27) (35) accessible from the boot (2) and for housing tools (36) supplied with the vehicle.

## Description

The present invention relates to a supporting structure for housing vehicle components and/or accessories.

As is known, vehicles in general, and motor vehicles in particular, are normally equipped with one or more batteries, a spare wheel, miscellaneous equipment, such as jacks, miscellaneous tools, warning or emergency devices, etc., for use when needed.

The batteries, in particular, are normally located in special compartments or housings formed in the vehicle by locally shaping and reinforcing the main vehicle structure. Besides requiring a specially shaped structure, such housings must often be shielded and/or insulated to safeguard the batteries, and, in any case, in most applications, reduce the space available inside the vehicle and engine compartment.

Moreover, most housings are not easily accessible, thus increasing vehicle assembly and maintenance time.

It is an object of the present invention to provide a supporting structure for housing components and/or accessories, designed to provide a straightforward, low-cost solution to the aforementioned drawbacks. Such device can be disassembled easily for recycling at the end of its working life.

According to the present invention, there is provided a supporting structure for housing components and/or accessories of a vehicle; the structure being insertable inside a compartment of the boot of the vehicle extending beneath the loading surface of the boot, and comprising a first supporting portion for supporting at least one battery of the vehicle, and at least a second supporting portion for supporting a spare wheel.

In the structure defined above, said first and said second supporting portion preferably extend one over the other.

The present invention also relates to a vehicle featuring such a supporting structure for housing components.

According to the present invention, there is provided a vehicle as claimed in Claim 17.

A non-limiting embodiment of the invention will be described by way of example with reference to the accompanying drawings, in which:
Figure 1 shows a partial longitudinal section of a vehicle featuring a component and/or accessory assembly in accordance with the teachings of the present invention;
Figure 2 shows a cross section of the Figure 1 assembly.

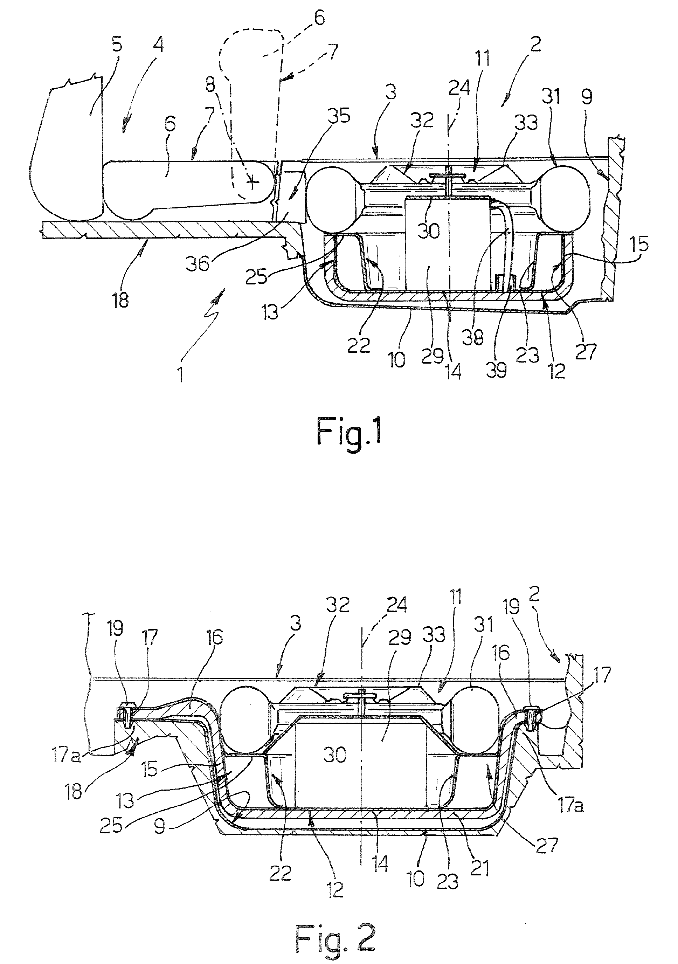

Number 1 in Figure 1 indicates as a whole a vehicle comprising a rear boot 2 defined by a supporting or loading surface 3; and a rear seat 4, in turn comprising a seat portion 5 and a drop-down seatback 6. Seatback 6 comprises a substantially flat rear wall 7, and rotates, about a horizontal hinge axis 8, between a raised position, and a drop-down position in which, as shown in Figure 1, wall 7 defines an extension of, and extends substantially coplanar with, loading surface 3.

A compartment 9 is formed in boot 2, beneath loading surface 3, is defined at the bottom by a sheet metal wall 10, and houses, suspended, an assembly 11 of components and/or accessories supplied with the vehicle.

Assembly 11 comprises a supporting structure or frame 12, in turn comprising a substantially cup-shaped outer casing 13 formed in one piece from metal material or plastic material or other reinforced, e.g. fibre-reinforced, material. Components 12 and 13 may be integrated.

Outer casing 13 comprises a flat horizontal bottom wall 14 adjacent to sheet metal wall 10; and a lateral wall 15 extending upwards from bottom wall 14 and also adjacent to the corresponding walls defining compartment 9. Lateral wall 15 terminates at the top with two or more opposite integral radial portions 16 (Figure 2), which project outwards of lateral wall 15, and terminate with respective fastening portions 17 resting on respective portions 17a of the main vehicle structure 18. Portions 17 are connected to portions 17a by screws 19 or other known fastening members fitted through openings formed in fastening portions 17 (Figure 2).

Casing 13 is covered externally with a layer 21 of known insulating material, and houses a hollow supporting shelf portion 22 preferably made of the same material as cup-shaped casing 13, or of different material, and possibly integrated in casing 13. In one variation, the outer casing has no layer 21. In the example described, hollow portion 22 is connected, conveniently welded, integrally to or integrated in outer casing 13, and comprises a tubular wall 23 extending from bottom wall 14 in a direction 24 perpendicular to bottom wall 14, and a flat top annular wall 25 facing and above bottom wall 14. Annular wall 25 connects walls 15 and 23, possibly integrated, and defines, together with walls 15 and 23, an annular compartment 27 accessible from inside the boot and downwards through openings formed in annular wall 25 and not shown in the accompanying drawings.

A vehicle battery 29 is housed inside tubular wall 23 in direction 24, rests on bottom wall 14, and is held contacting wall 14 by known fastening members 30 conveniently connected to respective known fastening members fitted to hollow portion 22.

A tyre 31 of a spare wheel 32 of the vehicle rests on annular wall 25, i.e. over battery 29, and a rim 33 of the wheel extends facing and detached from battery 29, and is connected releasably to fastening members 30. In the example described, battery 29 projects beyond annular wall 25 towards rim 33, and is therefore surrounded partly by tyre 31. On the side facing rear seat 4, tyre 31 defines, with rear seat 4, a compartment 35 accessible from inside boot 2 and for housing some of the standard equipment and warning devices supplied with the vehicle, such as a jack 36 shown schematically in Figure 1. Other items of such equipment are housed in compartment 27.

Using a supporting structure housed in a compartment beneath the loading surface of the boot, and comprising various supporting surfaces superimposed, in the example shown, in direction 24, provides for housing both the spare wheel and the battery and making optimum use of the space beneath the loading surface of the boot. Moreover, using a supporting structure suspended from the main vehicle structure, the loading compartment can be used with no need for local shaping or reinforcement of the main vehicle structure, which, in that particular area, may therefore be the same for different types of vehicles. For that reason, the compartment beneath the boot may be closed at the bottom by a straightforward sheet metal wall, regardless of the type of vehicle battery, spare wheel or accessory equipment, thus reducing manufacturing cost thanks to standardization.

A suspended supporting structure also greatly reduces vibration transmission to the battery, thus increasing the working life of the battery; and the configuration of the device provides, with no need for additional rigid members, for obtaining a flat loading compartment when the rear seat is dropped down.

Also housing the battery or batteries in the compartment beneath the boot normally used for housing the spare wheel creates additional space by clearing the vehicle areas formerly occupied by the batteries. Moreover, locating the battery in the compartment beneath the loading surface of the boot provides an all-round solution to the problems of shielding and insulating the battery, which, at the same time, can be inserted/removed easily, is easily accessible, and, above all, is protected, in the event of impact, by both the spare wheel and a hollow tubular assembly defined by walls 13 and 23 surrounding battery 29.

The particular design of supporting structure 12 - which, in addition to providing for support, can be inserted/removed extremely easily into/from the compartment beneath the boot, and is readily connectable to the main vehicle structure - also permits the formation, off the vehicle, i.e. off the assembly line, of a complete assembly comprising the spare wheel, batteries, and vehicle accessories. The complete assembly therefore also comprises the electric wiring 38 (Figure 1) connecting the battery to the vehicle electric circuit, and supporting structure 12 may comprise an outlet opening, indicated 39 in Figure 1, through which wiring 38 comes out of structure 12 and terminates with a connector for connection to the above-mentioned electric circuit.

Supporting structure 12 also provides for forming, beneath the boot, a number of compartments accessible from the outside, and so making the best possible use of the space beneath the boot.

Clearly, changes may be made to assembly 11 and, in particular, to supporting structure or frame 12 as described herein without, however, departing from the scope of the present invention. In particular, structure 12 may be formed otherwise than as described by way of example, though still for supporting at least the spare wheel and the battery, and may be shaped and/or fitted with additional bodies defining seats for housing and retaining the battery and/or spare wheel and/or vehicle equipment/accessories.

Finally, structure 12 may be connected to the main vehicle structure otherwise than as described, and, as opposed to being suspended, may rest partly on shoulders on the main structure, possibly with the interposition of damping bodies.

## Claims

1. A supporting structure (12) for housing components and/or accessories of a vehicle (1); the structure (12) being insertable inside a compartment (9) of the boot (2) of the vehicle (1) extending beneath the loading surface (3) of the boot (2), and comprising a first supporting portion (14) for supporting at least one battery (29) of the vehicle (1), and at least a second supporting portion (22) for supporting a spare wheel (32) .

2. A structure as claimed in claim 1, **characterized in that** said first (14) and said second (22) supporting portion extend one over the other.

3. A structure as claimed in claim 2, **characterized in that** said first (14) and said second (22) supporting portion extend in a common direction (24).

4. A structure as claimed in Claim 3, **characterized in that** said second supporting portion (22) comprises a tubular wall (23) surrounding said battery (29), and an annular supporting wall (25) surrounding the tubular wall (23); said spare wheel resting on said supporting wall (25) .

5. A structure as claimed in Claim 4, **characterized in that** said tubular wall (23) extends in said direction (24) to a height smaller than the dimension of the battery (29) measured in the same direction (24), so that the battery is surrounded at least partly by a tyre (31) of said spare wheel (32).

6. A structure as claimed in any one of the foregoing Claims, **characterized by** comprising a cup-shaped outer casing (13) housing said second supporting portion (22); said first supporting portion being defined by a bottom wall (14) of said cup-shaped outer casing (13) .

7. A structure as claimed in Claim 6, **characterized in that** said cup-shaped outer casing (13) defines, with said second supporting portion (22), at least one housing (27) accessible from the outside.

8. A structure as claimed in any one of the foregoing Claims, **characterized by** comprising fastening means (16, 17) for fastening said first (14) and said second (22) supporting portion, and which are connected to a vehicle structure (18) surrounding said compartment (9) formed in said boot (2).

9. A structure as claimed in Claim 8, **characterized in that** said fastening means comprise at least two opposite contoured portions (16) formed in one piece with at least one (14) of said first (14) and said second (22) supporting portion.

10. A structure as claimed in Claim 9, **characterized in that** said contoured portions comprise through openings fitted through with rodlike fastening members (19) for connection to said vehicle structure (18).

11. A structure as claimed in Claim 9 or 10, **characterized in that** said fastening means are designed to support said first (14) and said second (22) supporting portion (22) suspended inside said compartment (9) .

12. A structure as claimed in any one of the foregoing Claims, **characterized in that** at least one (22) of said first (14) and said second (22) supporting portion has fastening means for fastening members for fastening said battery (29) to said first supporting portion (14).

13. A component and/or accessory assembly (11) for a vehicle, **characterized by** being insertable inside a compartment (9) of the boot (2) extending beneath a loading surface (3) of the boot (2); and by comprising a supporting structure (12) for housing components and/or accessories of the vehicle, as claimed in Claims 1 to 12; at least one battery (29) resting on said first supporting portion (14); and a spare wheel (31) resting on said second supporting portion (22).

14. An assembly as claimed in Claim 13, **characterized in that** said spare wheel (31) at least partly surrounds said battery (29).

15. An assembly as claimed in Claim 13 or 14, **characterized in that** said structure (12) at least partly defines at least one compartment (27) accessible from inside the boot (2) and for housing tools, such as the jack/wrenches, and miscellaneous equipment supplied with the vehicle.

16. An assembly as claimed in one of Claims 13 to 15, **characterized in that** said structure (12) defines a passage (39) for electric wiring (38) connecting said battery (29) to an external electric circuit of the vehicle.

17. A vehicle (1) comprising a boot (2) defined by a loading surface (3), and a compartment (9) formed in said boot (2) and beneath said loading surface (3); **characterized by** also comprising a component and/or accessory assembly (11) as claimed in any one of Claims 13 to 16, housed in said compartment (9), and extending entirely beneath said loading surface (3).

18. A vehicle as claimed in Claim 17, **characterized in that** said spare wheel (31) projects partly outwards of said structure (12), and is located completely beneath said loading surface (3).

19. A vehicle as claimed in Claim 18, **characterized by** comprising a rear seat (4) having a drop-down seatback (6) defined, on the side facing said boot (2), by a substantially flat rear wall (7); said rear wall (7) defining an extension of said loading surface (3) when said seatback (6) is in a dropped-down position.

20. A vehicle as claimed in Claim 19, **characterized in that**, when said seatback (6) is in said dropped-down position, said rear wall (7) and said loading surface (3) are substantially coplanar.

21. A vehicle as claimed in any one of Claims 17 to 20, **characterized in that** said assembly (11) at least partly defines a further compartment (35) accessible from inside the boot (2) and for housing accessories (36) supplied with the vehicle.
